Europäisches Patentamt

European Patent Office

Office européen des brevets

(19)

(11) Publication number: **0 199 970**

A1

# EUROPEAN PATENT APPLICATION

(12)

(21) Application number: 86103806.5

(22) Date of filing: 20.03.86

(51) Int. Cl.⁴: **B60J 5/04** , B60R 13/06

(30) Priority: 16.04.85 IT 6735885

(43) Date of publication of application:
10.12.86 Bulletin 86/45

(84) Designated Contracting States:
DE FR GB SE

(71) Applicant: **FIAT AUTO S.p.A.**
**Corso Giovanni Agnelli 200**
**I-10135 Torino(IT)**

(72) Inventor: **Leonardis, Raffaele**
**Corso Unione Sovietica, 409**
**I-10100 Torino(IT)**

(74) Representative: **Bongiovanni, Guido et al**
**c/o Ingg. Carlo e Mario Torta Via Viotti 9**
**I-10121 Torino(IT)**

(54) Two-element door of improved type for a motor vehicle.

(57) A door (1) is described, composed of a load-bearing structure (2) on which the window pane (3) and all the accessories can be preassembled, and a covering structure (7) to be assembled rigid with the former after said preassembly of the accessories and having the special feature of being of shell configuration such that its facing walls (25, 26) define the outer and inner surface (27, 28) of the door together with an inner cavity (30) which is accessible through an upper profiled aperture (31) and is arranged to receive by insertion the lower portion (10) of the load-bearing structure (2).

EP 0 199 970 A1

Rank Xerox

Fig.1

0 199 970

1a

## TWO-ELEMENT DOOR OF IMPROVED TYPE FOR A MOTOR VEHICLE

This invention relates to a vehicle door of the type comprising two rigidly engageable elements, of which one is load-bearing and the other performs aesthetic covering functions, and on one of which the door accessories such as the descending window pane, the window regulator, locks and handles, can be preassembled off the production line.

The object of the invention is to provide a vehicle door of simple and economical structure which on the one hand enables a window pane of the type flush with the uprights together with its regulator to be preassembled on the door off the production line, and on the other hand enables a single type of load-bearing structure to be used for different door models.

Said object is attained according to the invention by a vehicle door of the type comprising a load-bearing structure on which a descending window pane with its guides and all the door accessory devices such as the window regulator and locks can be preassembled, and a covering structure to be assembled rigid with said load-bearing structure after said accessory devices have been preassembled on this latter, characterised in that said covering structure is configured as a shell comprising a first wall and a second wall which oppose and face each other to define respectively the outer surface and at least part of the inner surface of said door, and a perimetral wall substantially orthogonal to the preceding and defining the lower part of the perimetral edge of said door, said walls defining in the interior of said covering structure a cavity arranged to house at least the lower portion of said load-bearing structure and said descending window pane, said cavity being accessible only through an upper aperture configured in such a manner as to receive by insertion said lower portion of said load-bearing structure.

The invention will be more apparent from the non-limiting description given hereinafter of one embodiment thereof with reference to the accompanying drawings, in which:

Figure 1 is an exploded perspective view of the door according to the invention;

Figure 2 is a section on the line II-II of the door of Figure 1, in the assembled state; and

Figure 3 is a detail of Figure 2 to an enlarged scale.

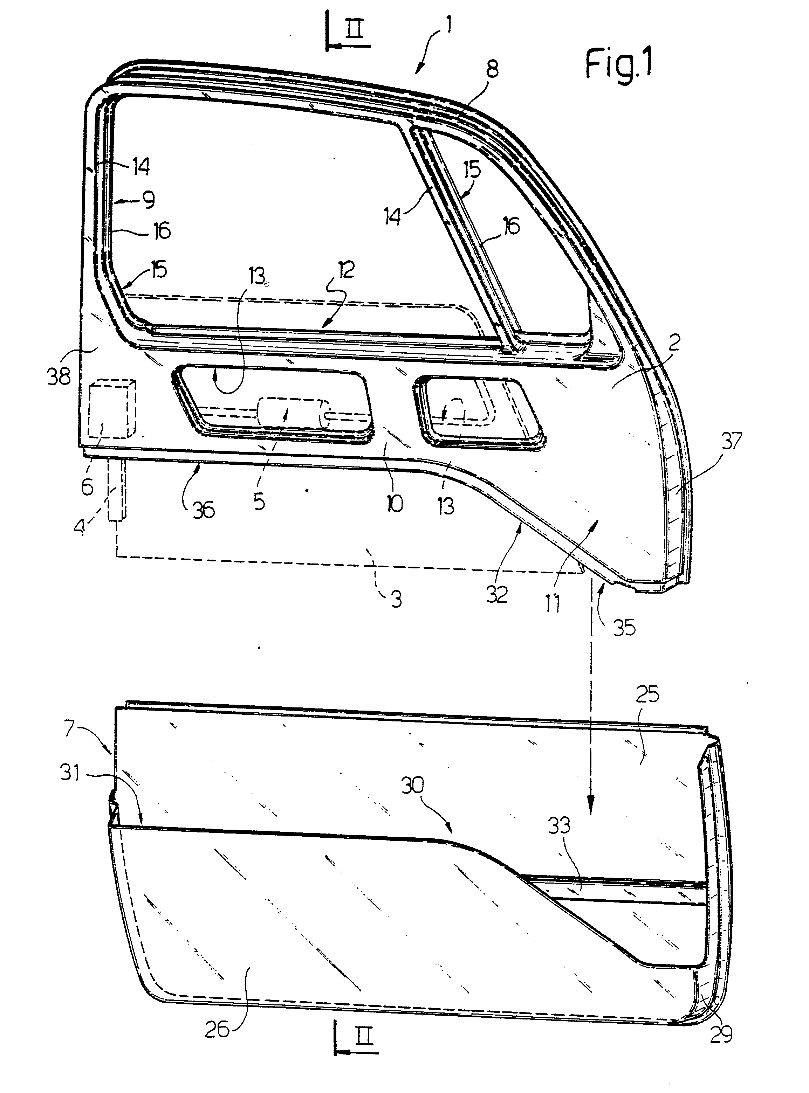

In Figures 1 to 3, the reference numeral 1 indicates overall a door for a vehicle, for example a motor vehicle of any known type, not shown for simplicity. The door 1 comprises a load-bearing structure 2 constructed preferably of pressed and welded sheet metal and having a structure of known type, on which a descending window pane 3 provided possibly with relative guides 4, and all the accessory devices of the door 1 such as a window regulator 5 and a lock 6, can be preassembled in known manner off the production line, and a covering structure 7 preferably formed integrally in one piece and constructed of a synthetic plastics resin, to be assembled rigid with the structure 2 after the said members 3, 4, 5 and 6 have been preassembled. The structure 2 is preferably of box type and comprises an upper frame 8 defining a window aperture 9 in the door 1 for closure by the mobile window pane 3, and a lower portion 10 arranged to engage with the structure 7 and carrying the window pane 3 and the other said accessories. In particular, the structure 2 is defined by a pair of opposing facing walls 11 and 12 configured in such a manner as to define in the lower portion 10 respective compartments 13 for housing the accessories, and on the frame 8 respective rail-shaped uprights 14 which define at their outer surface 15 respective guides 16 for the mobile window pane 3. This latter together with any lower guides 4, which replace the guides 16 in the lower part of the trajectory of the window pane 3, is carried by the wall 12, which faces outwards from the door 1, on the same side thereof as the surfaces 15 of the uprights 14, and is disposed flush with the outer contour of the frame 8, so as to be mobile along the uprights 14 flush with the surface 15 of these latter. According to the invention, the frame 8 is covered on that side comprising the window pane 3, ie towards the surfaces 15, by a section bar 18 constructed of the same material as the structure 7 and provided peripherally with a projecting seal gasket 19 for the window pane 3. The gasket 19 is housed along the inner edge of the frame 8, coplanar therewith, and comprises an elastically deformable seal lip 20 which projects from the section bar 18 perpendicular to the surface 15 of the uprights 14, and is arranged to cooperate by sliding, in a fluid-tight manner, with the inner surface 21 of the mobile window pane 3 which faces the wall 12.

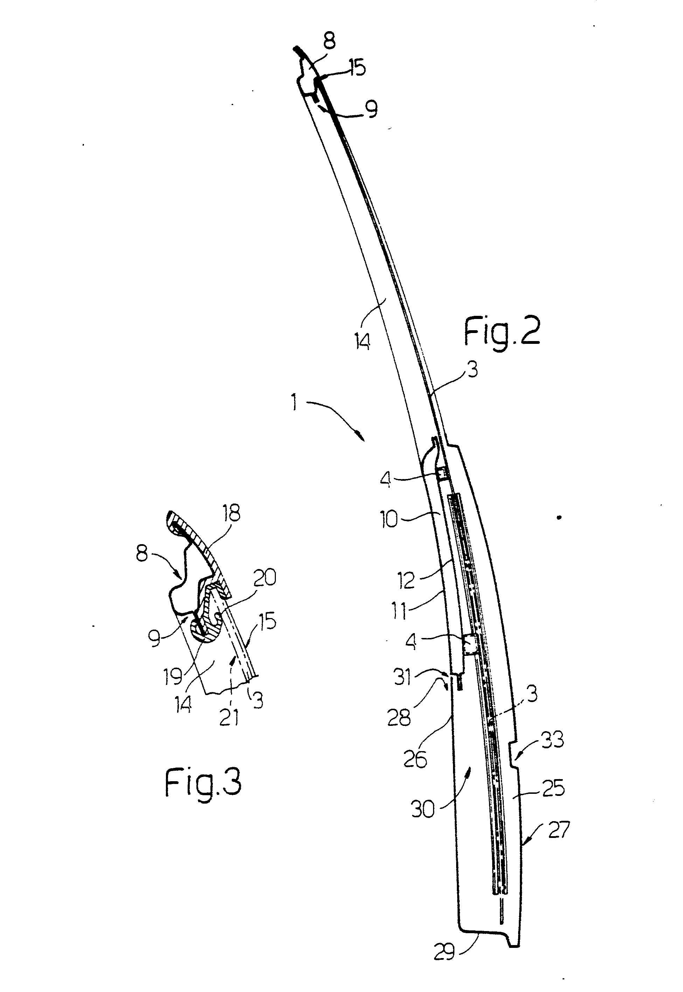

According to the invention, the structure 7 is configured as a shell arranged to receive in its interior the portion 10 and comprising a pair of opposing facing walls 25 and 26 defining respectively the outer surface 27 and at least part of the inner surface 28 of the door 1, and a perimetral wall 29 substantially orthogonal to the preceding and defining the lower part of the perimetral edge of the door 1. the walls 25, 26 and 29 define in the structure 7 a cavity 30 arranged to house in its interior the portion 10 of the structure 2 and the window pane 3 in its retracted position (Figure 1), together with the other said accessories. The cavity 30 is accessible from the open upper end of the structure 7 by way of an upper aperture 31 which is shaped and configured to receive the portion 10 by insertion, as shown in Figure 2. Preferably, the aperture 31 is shaped to reproduce the profile of the lower edge 32 of the portion 10, so that this latter is able to perfectly close the aperture 31 substantially in a sealed manner when the structure 7 and 2 are engaged, and to remain with the wall 11 flush with the corresponding wall 26 of the structure 7, so as to define together with this latter the inner surface 28 of the door 1, which can then if required be covered by a finishing panel of known type, not shown for simplicity. Preferably, the wall 25 is provided with a longitudinal stiffening rib 33 so that the structure 7 is completely self-supporting, and the edge 32 comprises an oblique front portion 35 and a substantially horizontal rear portion 36, which define respectively the front end 37 of the structure 2 and the rear end 38 thereof, this latter being of lesser height than the end 37. According to the invention, in this manner the structure 2 can be used for constructing either a vehicle front door or a vehicle rear door, which latter being close to the wheels has to be shaped at its rear to follow the wheelhouse profile. In this respect, to form a front door it is necessary only to engage the described structure 2 with a structure 7 of the type shown on the accompanying drawings, in which the lower edge is substantially straight, and in this manner the inner lower part of the door will be defined entirely by the wall 26, which covers the space which would otherwise be left by the rear end 38. In contrast, to form a rear side door it is necessary only to engage the same structure 2 with a covering structure which is not shown for simplicity but is identical to the structure 7 except for the fact that its lower edge is shaped to reproduce the profile of the edge 32 instead of being straight, so that the wall 26 is limited to a bent edge of the wall 29 which delimits the aperture 31 towards the surface 28. The enormous advantages offered by a door structured in accordance with the present invention in terms of economy of scale and ease of assembly are obvious, the structures 2 and 7 being fixed together in any suitable manner, for example by gluing or, preferably, by screws or other similar connection means.

From the description it is also apparent that the invention enables vehicle doors with their mobile window panes flush with the uprights to be produced at low cost and with ease, which doors can be automatically assembled, with all the accessories, which are carried by a single load-bearing structure, being preassembled and tested off the production line, the structure which remains exposed after assembly of the door being only for aesthetic and finishing purposes. Finally, as the outside of the door is covered entirely by plastics material, being defined by the wall 25 and section bar 18, the door according to the invention can dispense with the normal finishing elements, and is little affected by rust and small impacts. Finally, modifications can be made to the described embodiment of the door according to the invention without leaving the scope of the inventive idea.

## Claims

1. A vehicle door (1) of the type comprising a load-bearing structure (2) on which a descending window pane (3) with its guides and all the door accessory devices such as the window regulator (5) and lock (6) can be preassembled, and a covering structure (7) to be assembled rigid with said load-bearing structure (2) after said accessory devices (5, 6) have been preassembled on this latter, characterised in that said covering structure (7) is configured as a shell comprising a first wall and a second wall (25, 26) which oppose and face each other to define respectively the outer surface (27) and at least part of the inner surface (28) of said door (1), and a perimetral wall (29) substantially orthogonal to the preceding and defining the lower part of the perimetral edge of said door (1), said walls (25, 26, 29) defining in the interior of said covering structure (7) a cavity (30) arranged to house at least the lower portion (10) of said load-bearing structure (2) and said descending window pane (3), said cavity (30) being accessible only through an upper aperture (31) configured in such a manner as to receive by insertion said lower portion (10) of said load-bearing structure (2).

2. A door (1) as claimed in claim 1, characterised in that said load-bearing structure (2) comprises an upper frame (8) defining a window aperture (9) in said door and guides (16) for the movements of said descending window pane (3), this latter being carried by an outer wall (12) of said load-bearing structure (2) which faces said first wall (25) of said covering structure (7), and being disposed flush with the outer contour of said frame (8) so as to be mobile along respective uprights (14) of said frame (8) flush with the outer surface (16) of said uprights, said frame (8) being covered, on the side associated with said descending window pane (3), by a section bar (18) constructed of the same material as said covering structure (7) and provided peripherally with a projecting seal gasket (19) for said window pane (3), said gasket being housed along the inner edge of said frame (8) coplanar therewith and comprising an elastically deformable seal lip (20) projecting perpendicular to said outer surface (16) of said uprights (14) and arranged to cooperate, by sliding, with the inner surface (21) of said window pane (3) facing said outer wall (12) of the load-bearing structure (2).

3. A door (1) as claimed in claim 1 or 2, characterised in that said lower portion (10) of the load-bearing structure (2) is provided with compartments (13) for housing said accessories (5, 6), and by comprising a lower longitudinal edge (32) having an oblique front portion (35) and a substantially horizontal rear portion (36) which respectively delimit a front end (37) of said load-bearing structure (2) and rear end (38) thereof of lesser height than said front end (37).

4. A door (1) as claimed in one of the preceding claims, characterised in that said covering structure (7) is formed integrally in one piece and is constructed of a synthetic plastics material, said first wall (35) being provided with a longitudinal stiffening rib (33).

0 199 970

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 791 464  (RENNO) <br> * Column 1, lines  33-38;  column 2,  lines  16-32; column 3, lines 25-51; figure 1 * | 1-3 | B 60 J    5/04 <br> B 60 R   13/06 |
| Y | DE-A-2 739 178  (VOLKSWAGENWERK) <br> * Page 6,  lines  1-19;  page  8, lines 1-13; figures 1-4 * | 1-3 | |
| Y | FR-A-2 543 890  (RENAULT) <br> *  Page  3, line 5 - page 4, line 30; figures 1-9 * | 1-3 | |
| A | EP-A-0 128 621  (CLAMA) <br> * Page 3, lines  10-18;  page ·3, line  27  - page 4, line 10; page 4, line 24 - page 5, line 4; fig-ures 1-3 * | 1-4 | |
| | | | TECHNICAL FIELDS SEARCHED (Int. Cl.4) |
| A | GB-A-1 116 359  (CHAUSSON) <br> * Page 1, line 75 - page 2,  line 35; figures 1,3 * | 1,2,4 | B 60 J    1/00 <br> B 60 J    5/00 <br> B 60 R   13/00 |
| A | FR-A-1 597 263  (VOLKSWAGENWERK) <br> *  Page 1, line 38 - page 2, line 20; figures 1,3 * | 1,4 | |

-/-

| The present search report has been drawn up for all claims | | |
|---|---|---|
| Place of search <br> THE HAGUE | Date of completion of the search <br> 30-07-1986 | Examiner <br> AYITER I. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82

| Category | Citation of document with indication, where appropriate, of relevant passages | Relevant to claim | |
|---|---|---|---|
| A | FR-A-2 416 809 (ACIERS ET OUTILLAGES)<br>* Page 3, lines 12-14; page 4, lines 1-8; figures 1-7 * | 1,3 | |
| | --- | | |
| A | GB-A-2 136 863 (HONDA)<br>* Page 1, lines 46-53; figure 2 * | 1 | |
| | --- | | |
| P,A | EP-A-0 145 306 (FORD)<br>* Page 8, lines 28,29; figure 1 * | 1,4 | |
| | --- | | |
| P,A | EP-A-0 163 991 (FIAT)<br>* Page 4, lines 5-16; figure 2 * | 2 | |
| | ----- | | |

**European Patent Office**

# EUROPEAN SEARCH REPORT

Application number

EP 86 10 3806

## DOCUMENTS CONSIDERED TO BE RELEVANT

Page 2

| | | | CLASSIFICATION OF THE APPLICATION (Int. Cl.4) |

TECHNICAL FIELDS
SEARCHED (Int. Cl.4)

The present search report has been drawn up for all claims

| Place of search | Date of completion of the search | Examiner |
|---|---|---|
| THE HAGUE | 30-07-1986 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82